# EUROPEAN PATENT SPECIFICATION

(11) **EP 2 121 872 B1**
(45) Date of publication and mention of the grant of the patent: **09.12.2015**
(21) Application number: 08742127.7
(22) Date of filing: 19.03.2008
(51) Int. Cl.: C09K 11/02, B82B 1/00

(54) **METHODS FOR ENCAPSULATING NANOCRYSTALS**
VERFAHREN ZUR VERKAPSELUNG VON NANOKRISTALLEN
PROCÉDÉS POUR ENCAPSULER DES NANOCRISTAUX

(30) Priority: 19.03.2007 US 895656 P; 02.11.2007 US 985014 P
(43) Date of publication of application: 25.11.2009
(73) Proprietor: Nanosys, Inc., Palo Alto, CA 94304 (US)
(72) Inventor: DUBROW, Robert, S., San Carlos, CA 94070 (US)
(74) Representative: Kiddle, Simon John
(86) International application number: PCT/US2008/003549
(87) International publication number: WO 2008/115498

(56) References cited:
- WO-A1-2005/055330
- US-A1- 2002 018 632
- US-A1- 2003 148 379
- US-A1- 2005 051 766
- US-A1- 2005 164 589
- US-A1- 2005 214 967
- US-A1- 2005 214 967
- US-A1- 2005 215 164
- US-A1- 2006 068 154
- US-A1- 2006 208 657
- US-A1- 2007 031 674
- YASUHIKO TAKEDA ET AL: "A Novel Method Based on Oblique Depositions to Fabricate Quantum Dot Arrays", PHOTOVOLTAIC ENERGY CONVERSION, CONFERENCE RECORD OF THE 2006 IEEE 4TH WORLD CONFERENCE ON, IEEE, PI, 1 May 2006 (2006-05-01), pages 75-78, XP031007241, ISBN: 978-1-4244-0016-4

## Description

### BACKGROUND OF THE INVENTION

### Field of the Invention

The present invention relates to methods for hermetically sealing luminescent nanocrystals, and hermetically sealed nanocrystal compositions.

### Background of the Invention

Luminescent nanocrystals when exposed to air and moisture undergo oxidative damage, often resulting in a loss of luminescence. The use of luminescent nanocrystals in applications such as down-conversion and filtering layers often expose luminescent nanocrystals to elevated temperatures, high intensity light, environmental gasses and moisture. These factors, along with requirements for long luminescent lifetime in these applications, often limits the use of luminescent nanocrystals or requires frequent replacement. There exists a need therefore for methods and compositions to hermetically seal luminescent nanocrystals, thereby allowing for increased usage lifetime and luminescent intensity.

What is needed is a solution to provide methods and compositions for hermetically sealing luminescent nanocrystals.

The document US 2006/068154 A1 discloses a LED comprising a layer of luminescent nanocrystals in a polymer. A hard shell polymer covers the layer of luminescent CdSe/ ZnS core-shell nanocrystals.

### BRIEF SUMMARY OF THE INVENTION

The present invention provides methods and compositions for hermetically sealing luminescent nanocrystals. The compositions prepared according to the present invention can be applied to a variety of applications, and the methods allow for preparation of various shapes and configurations of hermetically sealed nanocrystal compositions.

In one embodiment, the present invention provides methods of hermetically sealing a composition comprising a plurality of luminescent nanocrystals. Suitably, the methods comprise disposing (e.g., sputtering or via atomic layer deposition) a barrier layer on the composition. Exemplary barrier layers include inorganic layers, such as, but not limited to, SiO₂, TiO₂ and AlO₂. In suitable embodiments, the luminescent nanocrystals for use in the practice of the present invention are core-shell luminescent nanocrystals, for example, CdSe/ZnS, CdSe/CdS or InP/ZnS nanocrystals.

The present invention also provides methods of hermetically sealing a container that comprises a plurality of luminescent nanocrystals. Suitably, a barrier layer (e.g., an inorganic layer) is disposed on the container to hermetically seal the luminescent nanocrystals. In other embodiments, the containers are hermetically sealed by heat sealing, ultrasonic welding, soldering or adhesive bonding the container. Suitably, the methods of the present invention are carried out in an inert atmosphere.

In additional embodiments, the present invention provides hermetically sealed compositions and containers comprising luminescent nanocrystals. Suitably, the luminescent nanocrystals are semiconductor luminescent nanocrystals with a size of between about 1-10 nm, including core-shell nanocrystals, for example, CdSe/ZnS or InP/ZnS nanocrystals. The compositions and containers are suitably hermetically sealed with a barrier layer, e.g., an inorganic layer, such as SiO₂, TiO₂ or AlO₂, or an organic material designed to significantly reduce oxygen and moisture transmission, such as a filled epoxy or liquid crystal polymer, oriented polymer or inherently low permeability polymer. In further embodiments, the hermetically sealed compositions and containers can further comprise a micropattem molded into the composition or container to form a microlens. In still further embodiments, the hermetically sealed compositions and containers can comprise a light-focusing apparatus associated with the compositions and containers. Such apparatus help to focus the light emitted from the compositions and containers into a beam.

Additional features and advantages of the invention will be set forth in the description that follows, and in part will be apparent from the description, or may be learned by practice of the invention. The advantages of the invention will be realized and attained by the structure and particularly pointed out in the written description and claims hereof as well as the appended drawings.

### BRIEF DESCRIPTION OF THE DRAWINGS/FIGURES

The accompanying drawings, which are incorporated herein and form a part of the specification, illustrate the present invention and, together with the description, further serve to explain the principles of the invention and to enable a person skilled in the pertinent art to make and use the invention.
Figure 1 shows a hermetically sealed luminescent nanocrystal composition in accordance with one embodiment of the present invention.
Figure 2 shows a method for hermetically sealing a container comprising luminescent nanocrystals in accordance with one embodiment of the present invention.
Figure 3 shows hermetically sealed luminescent nanocrystal compositions, including individually sealed compositions, in accordance with one embodiment of the present invention.
Figure 4 shows a hermetically sealed container comprising luminescent nanocrystals in accordance with one embodiment of the present invention.
Figure 5 shows a hermetically sealed composition further comprising a microlens in accordance with one embodiment of the present invention.
Figures 6A-6C show a hermetically sealed composition further comprising a light-focusing apparatus in accordance with one embodiment of the present invention.

The present invention will now be described with reference to the accompanying drawings. In the drawings, like reference numbers indicate identical or functionally similar elements.

### DETAILED DESCRIPTION OF THE INVENTION

It should be appreciated that the particular implementations shown and described herein are examples of the invention and are not intended to otherwise limit the scope of the present invention in any way. Indeed, for the sake of brevity, conventional electronics, manufacturing, semiconductor devices, and nanocrystal, nanowire (NW), nanorod, nanotube, and nanoribbon technologies and other functional aspects of the systems (and components of the individual operating components of the systems) may not be described in detail herein.

The present invention provides various compositions comprising nanocrystals, including luminescent nanocrystals. The various properties of the luminescent nanocrystals, including their absorption properties, emission properties and refractive index properties, can be tailored and adjusted for various applications. As used herein, the term "nanocrystal" refers to nanostructures that are substantially monocrystalline. A nanocrystal has at least one region or characteristic dimension with a dimension of less than about 500 nm, and down to on the order of less than about 1 nm. As used herein, when referring to any numerical value, "about" means a value of ± 10% of the stated value (e.g. "about 100 nm" encompasses a range of sizes from 90 nm to 110 nm, inclusive). The terms "nanocrystal," "nanodot," "dot" and "quantum dot" are readily understood by the ordinarily skilled artisan to represent like structures and are used herein interchangeably. The present invention also encompasses the use of polycrystalline or amorphous nanocrystals. As used herein, the term "nanocrystal" also encompasses "luminescent nanocrystals." As used herein, the term "luminescent nanocrystals" means nanocrystals that emit light when excited by an external energy source (suitably light). As used herein when describing the hermetic sealing of nanocrystals, it should be understood that in suitable embodiments, the nanocrystals are luminescent nanocrystals.

Typically, the region of characteristic dimension will be along the smallest axis of the structure. Nanocrystals can be substantially homogenous in material properties, or in certain embodiments, can be heterogeneous. The optical properties of nanocrystals can be determined by their particle size, chemical or surface composition. The ability to tailor the luminescent nanocrystal size in the range between about 1 nm and about 15 nm enables photoemission coverage in the entire optical spectrum to offer great versatility in color rendering. Particle encapsulation offers robustness against chemical and UV deteriorating agents.

Nanocrystals, including luminescent nanocrystals, for use in the present invention can be produced using any method known to those skilled in the art. Suitable methods and exemplary nanocrystals are disclosed in U.S. Patent Application No. 11/034,216, filed January 13, 2005; U.S. Patent Application No. 10/796,832, filed March 10, 2004; U.S. Patent No. 6,949,206; and U.S. Provisional Patent Application No. 60/578,236, filed June 8, 2004, the disclosures of each of which are incorporated by reference herein in their entireties. The nanocrystals for use in the present invention can be produced from any suitable material, including an inorganic material, and more suitably an inorganic conductive or semiconductive material. Suitable semiconductor materials include those disclosed in U.S. Patent Application No. 10/796,832, and include any type of semiconductor, including group II-VI, group III-V, group IV-VI and group IV semiconductors. Suitable semiconductor materials include, but are not limited to, Si, Ge, Sn, Se, Te, B, C (including diamond), P, BN, BP, BAs, AlN, AlP, AlAs, AlSb, GaN, GaP, GaAs, GaSb, InN, InP, InAs, InSb, AlN, AlP, AlAs, AlSb, GaN, GaP, GaAs, GaSb, ZnO, ZnS, ZnSe, ZnTe, CdS, CdSe, CdTe, HgS, HgSe, HgTe, BeS, BeSe, BeTe, MgS, MgSe, GeS, GeSe, GeTe, SnS, SnSe, SnTe, PbO, PbS, PbSe, PbTe, CuF, CuCl, CuBr, CuI, Si₃N₄, Ge₃N₄, Al₂O₃, (Al, Ga, In)₂ (S, Se, Te)₃, Al₂CO, and an appropriate combination of two or more such semiconductors.

In certain aspects, the semiconductor nanocrystals may comprise a dopant from the group consisting of: a p-type dopant or an n-type dopant. The nanocrystals useful in the present invention can also comprise II-VI or III-V semiconductors. Examples of II-VI or III-V semiconductor nanocrystals include any combination of an element from Group II, such as Zn, Cd and Hg, with any element from Group VI, such as S, Se, Te, Po, of the Periodic Table; and any combination of an element from Group III, such as B, Al, Ga, In, and Tl, with any element from Group V, such as N, P, As, Sb and Bi, of the Periodic Table.

The nanocrystals, including luminescent nanocrystals, useful in the present invention can also further comprise ligands conjugated, cooperated, associated or attached to their surface as described throughout. Suitable ligands include any group known to those skilled in the art, including those disclosed in U.S. Patent Application No. 11/034,216, U.S. Patent Application No. 10/656,910 and U.S. Provisional Patent Application No. 60/578,236, the disclosures of each of which are incorporated herein by reference. Use of such ligands can enhance the ability of the nanocrystals to incorporate into various solvents and matrixes, including polymers. Increasing the miscibility (i.e., the ability to be mixed without separation) of the nanocrystals in various solvents and matrixes allows them to be distributed throughout a polymeric composition such that the nanocrystals do not aggregate together and therefore do not scatter light. Such ligands are described as "miscibility-enhancing" ligands herein.

As used herein, the term nanocomposite refers to matrix materials comprising nanocrystals distributed or embedded therein. Suitable matrix materials can be any material known to the ordinarily skilled artisan, including polymeric materials, organic and inorganic oxides. Nanocomposites of the present invention can be layers, encapsulants, coatings or films as described herein. It should be understood that in embodiments of the present invention where reference is made to a layer, polymeric layer, matrix, or nanocomposite, these terms are used interchangeably, and the embodiment so described is not limited to any one type of nanocomposite, but encompasses any matrix material or layer described herein or known in the art.

Down-converting nanocomposites (for example, as disclosed in U.S. Patent Application No. 11/034,216) utilize the emission properties of luminescent nanocrystals that are tailored to absorb light of a particular wavelength and then emit at a second wavelength, thereby providing enhanced performance and efficiency of active sources (e.g., LEDs). As discussed above, use of luminescent nanocrystals in such down-conversion applications, as well as other filtering or coating applications, often exposes the nanocrystals to elevated temperatures, high intensity light (e.g., an LED source), external gasses, and moisture. Exposure to these conditions can reduce the efficiency of the nanocrystals, thereby reducing useful product lifetime. In order to overcome this problem, the present invention provides methods for hermetically sealing luminescent nanocrystals, as well as hermetically sealed containers and compositions comprising luminescent nanocrystals.

### Luminescent Nanocrystal Phosphors

While any method known to the ordinarily skilled artisan can be used to create nanocrystal phosphors, suitably, a solution-phase colloidal method for controlled growth of inorganic nanomaterial phosphors is used. *See* Alivisatos, A.P., "Semiconductor clusters, nanocrystals, and quantum dots," Science 271:933 (1996); X. Peng, M. Schlamp, A. Kadavanich, A.P. Alivisatos, "Epitaxial growth of highly luminescent CdSe/CdS Core/Shell nanocrystals with photostability and electronic accessibility," J. Am. Chem. Soc. 30:7019-7029 (1997); and C. B. Murray, D.J. Norris, M.G. Bawendi, "Synthesis and characterization of nearly monodisperse CdE (E = sulfur, selenium, tellurium) semiconductor nanocrystallites," J. Am. Chem. Soc. 115:8706 (1993), the disclosures of which are incorporated by reference herein in their entireties. This manufacturing process technology leverages low cost processability without the need for clean rooms and expensive manufacturing equipment. In these methods, metal precursors that undergo pyrolysis at high temperature are rapidly injected into a hot solution of organic surfactant molecules. These precursors break apart at elevated temperatures and react to nucleate nanocrystals. After this initial nucleation phase, a growth phase begins by the addition of monomers to the growing crystal. The result is freestanding crystalline nanoparticles in solution that have an organic surfactant molecule coating their surface.

Utilizing this approach, synthesis occurs as an initial nucleation event that takes place over seconds, followed by crystal growth at elevated temperature for several minutes. Parameters such as the temperature, types of surfactants present, precursor materials, and ratios of surfactants to monomers can be modified so as to change the nature and progress of the reaction. The temperature controls the structural phase of the nucleation event, rate of decomposition of precursors, and rate of growth. The organic surfactant molecules mediate both solubility and control of the nanocrystal shape. The ratio of surfactants to monomer, surfactants to each other, monomers to each other, and the individual concentrations of monomers strongly influence the kinetics of growth.

In suitable embodiments, CdSe is used as the nanocrystal material, in one example, for visible light down-conversion, due to the relative maturity of the synthesis of this material. Due to the use of a generic surface chemistry, it is also possible to substitute non-cadmium-containing nanocrystals.

### Core/Shell Luminescent Nanocrystals

In semiconductor nanocrystals, photo-induced emission arises from the band edge states of the nanocrystal. The band-edge emission from luminescent nanocrystals competes with radiative and non-radiative decay channels originating from surface electronic states. X. Peng, et al., J. Am. Chem: Soc. 30:7019-7029 (1997). As a result, the presence of surface defects such as dangling bonds provide non-radiative recombination centers and contribute to lowered emission efficiency. An efficient and permanent method to passivate and remove the surface trap states is to epitaxially grow an inorganic shell material on the surface of the nanocrystal. X. Peng, et al., J. Am. Chem. Soc. 30:7019-7029 (1997). The shell material can be chosen such that the electronic levels are type I with respect to the core material (e.g., with a larger bandgap to provide a potential step localizing the electron and hole to the core). As a result, the probability of non-radiative recombination can be reduced.

Core-shell structures are obtained by adding organometallic precursors containing the shell materials to a reaction mixture containing the core nanocrystal. In this case, rather than a nucleation-event followed by growth, the cores act as the nuclei, and the shells grow from their surface. The temperature of the reaction is kept low to favor the addition of shell material monomers to the core surface, while preventing independent nucleation of nanocrystals of the shell materials. Surfactants in the reaction mixture are present to direct the controlled growth of shell material and ensure solubility. A uniform and epitaxially grown shell is obtained when there is a low lattice mismatch between the two materials. Additionally, the spherical shape acts to minimize interfacial strain energy from the large radius of curvature, thereby preventing the formation of dislocations that could degrade the optical properties of the nanocrystal system.

Exemplary materials for preparing core-shell luminescent nanocrystals include, but are not limited to, Si, Ge, Sn, Se, Te, B, C (including diamond), P, Co, Au, BN, BP, BAs, AlN, AlP, AlAs, AlSb, GaN, GaP, GaAs, GaSb, InN, InP, InAs, InSb, AlN, AlP, AlAs, AlSb, GaN, GaP, GaAs, GaSb, ZnO, ZnS, ZnSe, ZnTe, CdS, CdSe, CdTe, HgS, HgSe, HgTe, BeS, BeSe, BeTe, MgS, MgSe, GeS, GeSe, GeTe, SnS, SnSe, SnTe, PbO, PbS, PbSe, PbTe, CuF, CuCl, CuBr, CuI, Si₃N₄, Ge₃N₄, Al₂O₃, (Al, Ga, In)₂ (S, Se, Te)₃, Al₂CO, and an appropriate combination of two or more such materials. Exemplary core-shell luminescent nanocrystals for use in the practice of the present invention include, but are not limited to, (represented as Core/Shell), CdSe/ZnS, InP/ZnS, PbSe/PbS, CdSe/CdS, CdTe/CdS, CdTe/ZnS, as well as others.

### Hermetically Sealed Luminescent Nanocrystal Compositions and Luminescent Nanocrystal-comprising Containers

In one embodiment, the present invention provides methods of hermetically sealing a composition comprising a plurality of luminescent nanocrystals. The methods suitably comprise disposing a barrier layer on the composition to seal the luminescent nanocrystals. As discussed throughout, the terms "hermetic," "hermetic sealing," and "hermetically sealed" are used throughout to indicate that the composition, container and/or luminescent nanocrystals are prepared in such a way that the quantity of gases (e.g., air) or moisture that passes through or penetrates the container or composition, and/or that contacts the luminescent nanocrystals is reduced to a level where it does not substantially effect the performance of the nanocrystals (e.g., their luminescence). Therefore, a "hermetically sealed composition," for example one that comprises luminescent nanocrystals, is a composition that does not allow an amount of air (or other gas, liquid or moisture) to penetrate the composition and contact the luminescent nanocrystals such that the performance of the nanocrystals (e.g., the luminescence) is substantially effected or impacted (e.g., reduced).

As used throughout, a plurality of luminescent nanocrystals means more than one nanocrystal (i.e., 2, 3, 4, 5, 10, 100, 1,000, 1,000,000, etc., nanocrystals). The compositions will suitably comprise luminescent nanocrystals having the same composition, though in further embodiments, the plurality of luminescent nanocrystals can be various different compositions. For example, the luminescent nanocrystals can all emit at the same wavelength, or in further embodiments, the compositions can comprise luminescent nanocrystals that emit at different wavelengths.

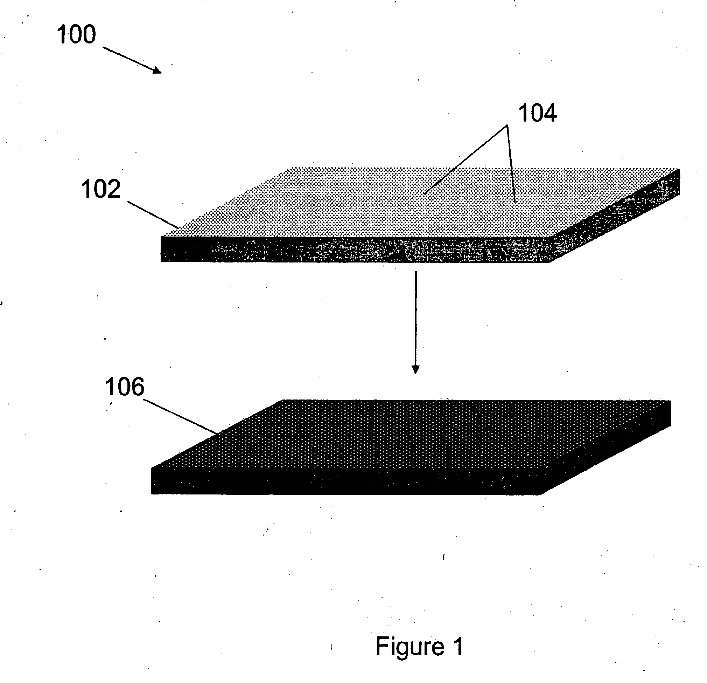

As shown in Figure 1, in one embodiment, the present invention provides a composition 100 comprising a plurality of luminescent nanocrystals 104. Any nanocrystal can be prepared in the compositions of the present invention, including those described throughout, and otherwise known in the art, for example, as disclosed in U.S. Patent Application No. 11/034,216.

In suitable embodiments, composition 100 comprises a plurality of luminescent nanocrystals 104 dispersed throughout a matrix 102. As used throughout, dispersed includes uniform (i.e., substantially homogeneous) as well as non-uniform (i.e., substantially heterogeneous) distribution/placement of nanocrystals. Suitable matrixes for use in the compositions of the present invention include polymers and organic and inorganic oxides. Suitable polymers for use in the matrixes of the present invention include any polymer known to the ordinarily skilled artisan that can be used for such a purpose. In suitable embodiments, the polymer will be substantially translucent or substantially transparent. Such polymers include, but are not limited to, poly(vinyl butyral):poly(vinyl acetate); epoxies; urethanes; silicone and derivatives of silicone, including, but not limited to, polyphenylmethylsiloxane, polyphenylalkylsiloxane, polydiphenylsiloxane, polydialkylsiloxane, fluorinated silicones and vinyl and hydride substituted silicones; acrylic polymers and copolymers formed from monomers including but not limited to, methylmethacrylate, butylmethacrylate and laurylmethacrylate; styrene based polymers; and polymers that are crosslinked with difunctional monomers, such as divinylbenzene.

The luminescent nanocrystals used the present invention can be embedded in a polymeric (or other suitable material, e.g., waxes, oils) matrix using any suitable method, for example, mixing the nanocrystals in a polymer and casting a film, mixing the nanocrystals with monomers and polymerizing them together, mixing the nanocrystals in a sol-gel to form an oxide, or any other method known to those skilled in the art. As used herein, the term "embedded" is used to indicate that the luminescent nanocrystals are enclosed or encased within the polymer that makes up the majority component of the matrix. It should be noted that luminescent nanocrystals are suitably uniformly distributed throughout the matrix, though in further embodiments they can be distributed according to an application-specific uniformity distribution function.

The thickness of the composition of the present invention can be controlled by any method known in the art, such as spin coating and screen printing. The luminescent nanocrystal compositions of the present invention can be any desirable size, shape, configuration and thickness. For example, the compositions can be in the form of layers, as well as other shapes, for example, discs, spheres, cubes or blocks, tubular configurations and the like. While the various compositions of the present invention can be any thickness required or desired, suitably, the compositions are on the order of about 100 mm in thickness (i.e., in one dimension), and down to on the order of less than about 1 mm in thickness. In other embodiments, the polymeric layers of the present invention can be on the order of 10's to 100's of microns in thickness. The luminescent nanocrystals can be embedded in the various compositions/matrixes at any loading ratio that is appropriate for the desired function. Suitably, the luminescent nanocrystals will be loaded at a ratio of between about 0.001% and about 75% by volume depending upon the application, matrix and type of nanocrystals used. The appropriate loading ratios can readily be determined by the ordinarily skilled artisan and are described herein further with regard to specific applications. In exemplary embodiments the amount of nanocrystals loaded in a luminescent nanocrystal composition are on the order of about 10% by volume, to parts-per-million (ppm) levels.

Luminescent nanocrystals for use in the present invention will suitably be less than about 100 nm in size, and down to less than about 2 nm in size. In suitable embodiments, the luminescent nanocrystals of the present invention absorb visible light. As used herein, visible light is electromagnetic radiation with wavelengths between about 380 and about 780 nanometers that is visible to the human eye. Visible light can be separated into the various colors of the spectrum, such as red, orange, yellow, green, blue, indigo and violet. The photon-filtering nanocomposites of the present invention can be constructed so as to absorb light that makes up any one or more of these colors. For example, the nanocomposites of the present invention can be constructed so as to absorb blue light, red light, or green light, combinations of such colors, or any colors in between. As used herein, blue light comprises light between about 435 nm and about 500 nm, green light comprises light between about 520 nm and 565 nm and red light comprises light between about 625 nm and about 740 nm in wavelength. The ordinarily skilled artisan will be able to construct nanocomposites that can filter any combination of these wavelengths, or wavelengths between these colors, and such nanocomposites are embodied by the present invention.

In other embodiments, the luminescent nanocrystals have a size and a composition such that they absorb photons that are in the ultraviolet, near-infrared, and/or infrared spectra. As used herein, the ultraviolet spectrum comprises light between about 100 nm to about 400 nm, the near-infrared spectrum comprises light between about 750 nm to about 100 µm in wavelength and the infrared spectrum comprises light between about 750 nm to about 300 µm in wavelength.

While luminescent nanocrystals of any suitable material can be used in the practice of the present invention, in certain embodiments, the nanocrystals can be ZnS, InAs or CdSe nanocrystals, or the nanocrystals can comprise various combinations to form a population of nanocrystals for use in the practice of the present invention. As discussed above, in further embodiments, the luminescent nanocrystals are core/shell nanocrystals, such as CdSe/ZnS, CdSe/CdS or InP/ZnS.

In order to hermetically seal the compositions of the present invention, a barrier layer is disposed on the composition. For example, as shown in Figure 1, a barrier layer 106 is disposed on the matrix 102 comprising luminescent nanocrystals 104, thereby generating a hermetically sealed composition. The term "barrier layer" is used throughout to indicate a layer, coating, sealant or other material that is disposed on the matrix 102 so as to hermetically seal the composition. Examples of barrier layers include any material layer, coating or substance that can create an airtight seal on the composition. Suitable barrier layers include inorganic layers, suitably an inorganic oxide such as an oxide of Al, Ba, Ca, Mg, Ni, Si, Ti or Zr. Exemplary inorganic oxide layers, include SiO₂, TiO₂, AlO₂ and the like. As used throughout, the terms "dispose," and "disposing" include any suitably method of application of a barrier layer. For example, disposing includes layering, coating, spraying, sputtering, plasma enhanced chemical vapor deposition, atomic layer deposition, or other suitable method of applying a barrier layer to the compositions. In suitable embodiments, sputtering is used to dispose the barrier layer on the compositions. Sputtering comprises a physical vapor deposition process where high-energy ions are used to bombard elemental sources of material, which eject vapors of atoms that are then deposited in thin layers on a substrate. See for example, U.S. Patent Nos. 6,541,790; 6,107,105; and 5,667,650, the disclosures of each of which are incorporated by reference herein in their entireties.

In further embodiments, disposing the barrier layer can be carried out using atomic layer deposition. In applications such as coatings of LEDs, luminescent nanocrystal compositions, such as nanocrystal-comprising polymeric layers, can often have complex geometries and features. For example, components of the LED such as bond wires and solder joints often are directly in contact with, or even contained within, the polymeric layer. In order to properly hermetically seal the nanocrystal composition, a virtually defect-free (i.e., pin hole-free) barrier layer is often required. In addition, application of the barrier layer should not degrade the polymer or the nanocrystals. Therefore, in suitable embodiments, atomic layer deposition is used to dispose the barrier layer.

Atomic layer deposition (ALD) can comprise disposition of an oxide layer (e.g., TiO₂, SiO₂, AlO₂, etc.) on the luminescent nanocrystal composition, or in further embodiments, deposition of a non-conductive layer, such as a nitride (e.g., silicon nitride) can be used. ALD deposits an atomic layer (i.e., only a few molecules thick) by alternately supplying a reaction gas and a purging gas. A thin coating having a high aspect ratio, uniformity in a depression, and good electrical and physical properties, can be formed. Barrier layers deposited by the ALD method suitably have a low impurity density and a thickness of less than 1000 nm, suitably less than about 500 nm, less than about 200 nm, less than about 50 nm, less than about 20 nm, or less than about 5 nm.

For example, in suitable embodiments, two reaction gases, A and B are used. When only the reaction gas, A, flows into a reaction chamber, atoms of the reaction gas A are chemically adsorbed on the luminescent nanocrystal composition. Then, any remaining reaction gas A is purged with an inert gas such as Ar or nitrogen. Then, reaction gas B flows in, wherein a chemical reaction between the reaction gases A and B occurs only on the surface of the luminescent nanocrystal composition on which the reaction gas A has been adsorbed, resulting in an atomic barrier layer on the composition.

In embodiments where a non-conductive layer, such as a nitride layer is disposed, suitably SiH₂Cl₂ and remote plasma enhanced NH₃ are used to dispose a silicon nitride layer. This can be performed at a low temperature and does not require the use of reactive oxygen species.

Use of ALD for disposition of a barrier layer on the luminescent nanocrystal composition generates a virtually pin-hole free barrier layer regardless of the morphology of the substrate. The thickness of the barrier layer can be increased by repeating the deposition steps, thereby increasing the thickness of the layer in atomic layer units according to the number of repetitions. In addition, the barrier layer can be further coated with additional layers (e.g., via sputtering, CVD or ALD) to protect or further enhance the barrier.

Suitably, the ALD methods utilized in the practice of the present invention are performed at a temperature of below about 500°C, suitably below about 400°C, below about 300°C, or below about 200°C.

Exemplary barrier materials include organic material designed to specifically reduce oxygen and moisture transmission. Examples include filled epoxies (such as alumina filled epoxies) as well as liquid crystalline polymers.

As discussed throughout, matrix 102 suitably comprises a polymeric substrate. Thus, the present invention comprises methods of hermetically sealing compositions comprising luminescent nanocrystals, suitably polymeric substrates comprising luminescent nanocrystals, by disposing a barrier layer on the composition using any of the various methods disclosed herein or otherwise known in the art..

The ability to use polymeric substrates as matrix 102 allows for the formation of various shapes and configurations of the compositions, simply by molding or otherwise manipulating the compositions into the desired shape/orientation. For example, a solution/suspension of luminescent nanocrystals can be prepared (e.g., luminescent nanocrystals in a polymeric matrix). This solution can then be placed into any desired mold to form a required shape, and then cured (e.g., cooled or heated depending upon the type of polymer) to form a solid or semi-solid structure. For example, a mold can be prepared in the shape of a cap or disc to place on or over an LED. This then allows for preparation of a composition that can be used as a down-converting layer, for example. Following preparation of the desired shape, a barrier layer is then disposed on the composition to hermetically seal the composition, thereby protecting the luminescent nanocrystals from oxidation.

In additional embodiments, a composition comprising luminescent nanocrystals (e.g., a polymeric composition) can be disposed directly on a desired substrate or article (for example an LED). The luminescent nanocrystal composition (e.g., a solution or suspension) can then be cured and then a barrier layer disposed on the composition, thereby hermetically sealing the composition directly on the desired substrate or article. Such embodiments therefore do not require the preparation of a separate composition, and instead allow for the preparation of the composition directly on the desired article/substrate (e.g., a light source or other end product).

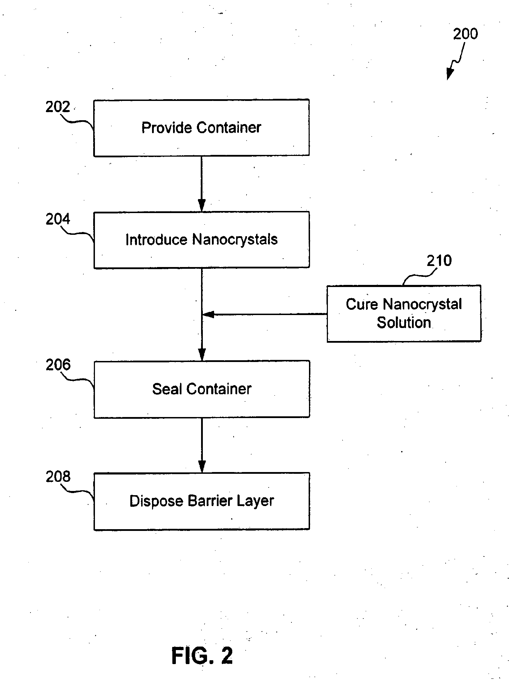

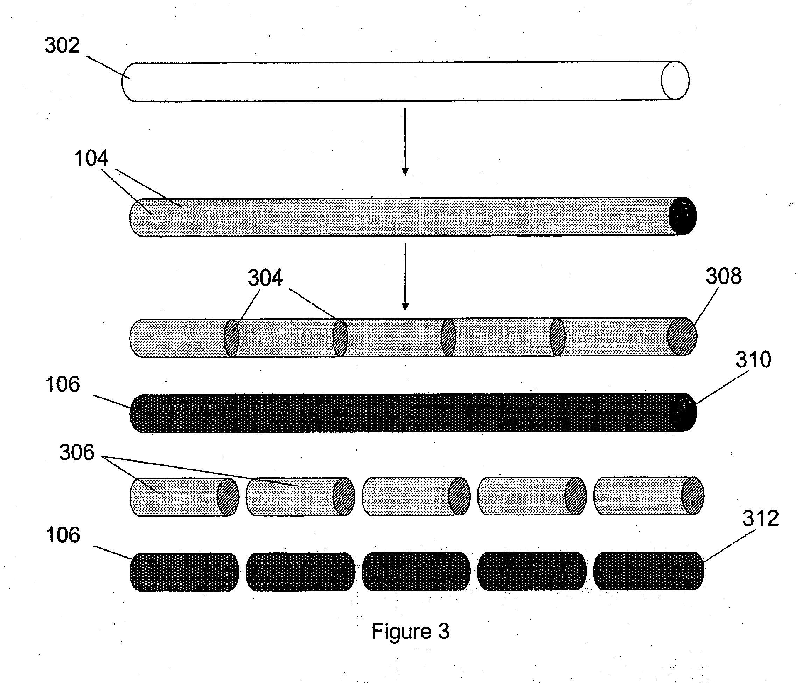

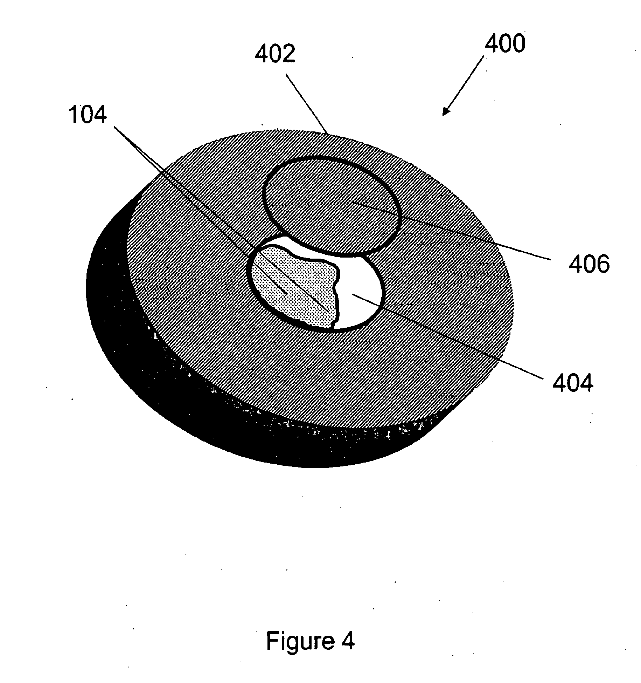

In a further embodiment, the present invention provides methods for hermetically sealing a container which comprises a plurality of luminescent nanocrystals. Suitably the methods comprise providing a container, introducing luminescent nanocrystals into the container, and then sealing the container. For example, an exemplary method for hermetically sealing a container of luminescent nanocrystals is shown in flowchart 200 of Figure 2, with reference to Figures 3 and 4. In step 202 if Figure 2, a container is provided, for example, containers 302 or 402 in Figures 3 and 4 are be provided. As used herein, "container" refers to any suitable article or receptacle for retaining nanocrystals. It should be understood that, as used herein, a "container" comprising luminescent nanocrystals and a "composition" comprising luminescent nanocrystals represent different embodiments of the present invention. A "composition" comprising luminescent nanocrystals refers to a matrix, e.g., a polymer substrate, solution or suspension, which contains nanocrystals dispersed throughout. A "container" as used herein, refers to a carrier, receptacle or pre-formed article into which luminescent nanocrystals are introduced (often a composition of luminescent nanocrystals, e.g., a polymeric matrix comprising luminescent nanocrystals). Examples of containers include, but are not limited to, polymeric or glass structures such as tubes, molded or formed vessels, or receptacles. In exemplary embodiments, a container can be formed by extruding a polymeric or glass substance into a desired shape, such as a tube (circular, rectangular, triangular, oval or other desired cross-section), or similar structure. Any polymer can be used to form the containers for use in the practice of the present invention, including those described throughout. Exemplary polymers for preparation of containers for use in the practice of the present invention include, but are not limited to, acrylics, poly(methyl methacrylate) (PMMA), and various silicone derivatives. Additional materials can also be used to form the containers for use in the practice of the present invention. For example, the containers can be prepared from metals, various glasses, ceramics and the like.

For example, as shown in Figure 2, once a container is provided in step 202, a plurality of luminescent nanocrystals 104 are then introduced into the container in step 204. As used herein, "introduced" includes any suitable method of providing luminescent nanocrystals into a container. For example, luminescent nanocrystals can be injected into a container, placed into a container, drawn into a container (e.g., by using a suction or vacuum mechanism), directed into a container, for example by using an electromagnetic field, or other suitable method for introducing luminescent nanocrystals into a container. Suitably, the luminescent nanocrystals are present in a solution or suspension, for example in a polymeric solution, thereby aiding in the introduction of the nanocrystals into the container. In exemplary embodiments, luminescent nanocrystals 104 can be drawn into a container, for example a tubular container 302, such as is shown in Figure 3. In further embodiments, as shown in Figure 4, a container 402 can be prepared with a cavity or void 404 into which luminescent nanocrystals 104 can be introduced. For example, a solution of luminescent nanocrystals 104 can be introduced into the cavity 404 in container 402.

Following introduction of the luminescent nanocrystals into the container, the container is then hermetically sealed, as shown in Figure 2, in step 206. Examples of methods for hermetically sealing the container include, but are not limited to, heat sealing the container, ultrasonic welding the container, soldering the container or adhesive bonding the container. For example, as shown in Figure 3, container 302 can be sealed at any number of positions, creating various number of seals 304 throughout the container. In exemplary embodiments, container 302 can be heat sealed at various positions throughout the container, for example by heating and then "pinching" the container at various sealing points (304).

In suitable embodiments, as shown in Figure 3, a polymeric or glass tube can be used as container 302. A solution of luminescent nanocrystals. 104 can then be drawn into the container by simply applying a reduced pressure to an end of the container. Container 302 can then be sealed by heating and "pinching" the container at various sealing positions or seals 304 throughout the length of the container, or by using other sealing mechanisms as described throughout. In this way, container 302 can be separated into various individual sections 306. These sections can either retained together as a single, sealed container 308, or the sections can be separated into individual pieces, as shown in Figure 3. Hermetic sealing of container 302 can be performed such that each individual seal 304 separates solutions of the same nanocrystals. In other embodiments, seals 304 can be created such that separate sections of container 302 each contain a different nanocrystal solution (i.e., different nanocrystal composition, size or density).

In a further embodiment, as shown in Figure 4, luminescent nanocrystals can be placed into a cavity/void 404 formed in container 402. Container 402 can be produced using any suitable process. For example, container 402 can be injection molded into any desired shape or configuration. Cavity/void 404 can be prepared during the initial preparation process (i.e., during molding) or can be subsequently added after formation. Luminescent nanocrystals 104 are then introduced into cavity/void 404. For example, luminescent nanocrystals can be injected or placed into cavity/void 404 of container 402. Suitably, a solution of luminescent nanocrystals will fill the entire container, though it is not necessary to completely fill the container with nanocrystals. In the case where the entire container is not filled, it is necessary though to remove substantially all of the air in the container prior to sealing to ensure that the luminescent nanocrystals are hermetically sealed. As shown in Figure 4, in exemplary embodiments, container 402 can be hermetically sealed by bonding, welding or otherwise sealing the container with a cover or lid 406. Suitably, cover 406 is produced from the same material as container 402 (and can suitably be partially attached prior to sealing), though it can also comprise a different material. In additional embodiments, a material such as an organic material designed to specifically reduce oxygen and moisture transmission can be used to cover or seal container 402. Examples include filled epoxies (such as alumina filled epoxies) as well as liquid crystalline polymers.

The ability to produce custom designed containers, for example via molding, extruding or otherwise shaping containers, allows for preparation of very specialized parts into which luminescent nanocrystals can be introduced and hermetically sealed. For example, shapes can be produced that conform around LEDs or other light sources (e.g., for use to pipe down-conversion into another optical component). In addition, various films, discs, layers, and other shapes can be prepared. In exemplary embodiments, several different containers can be prepared, each of which can contain different compositions of luminescent nanocrystals (i.e., each composition emitting a different color), and then the separate containers can be utilized together to create the desired performance characteristics. In further embodiments, containers can be prepared with multiple cavities or reservoirs into which luminescent nanocrystals can be introduced.

While luminescent nanocrystals 104 can be hermetically sealed into containers 302, 402, while still in solution, suitably the luminescent nanocrystal solution is cured before hermetic sealing (e.g., in step 210 of Figure 2). As used herein, "cured" refers to the process of hardening a solution of luminescent nanocrystals (e.g., a polymeric solution). Curing can be achieved by simply allowing the solution to dry and any solvent to evaporate, or curing can be achieve by heating or exposing the solution to light or other external energy. Following curing, the container can be hermetically sealed using the various methods described throughout.

In exemplary embodiments, no additional hermetic sealing is necessary to protect the luminescent nanocrystals from oxidative degradation. For example, sealing luminescent nanocrystals in a glass or polymeric container provides sufficient protection from oxygen and moisture that further modifications are not necessary. However, in further embodiments, an additional level of protection from oxidation can be added to the hermetically sealed containers by disposing a barrier layer on the container. For example, as shown in step 208 of Figure 2. As described throughout, exemplary barrier layers include inorganic layers, such as inorganic oxides like SiO₂, TiO₂ and AlO₂, as well as organic materials. While any method of disposing the barrier layer onto the container can be used, suitably the barrier layer is sputtered onto the container or disposed onto the container via ALD. As shown in Figure 3, barrier layer 106 can be disposed on the container with sealed sections, or on individual sections following sealing and separation from one another, thereby producing hermetically sealed containers (310, 312).

In suitable embodiments of the present invention, the various steps to produce a hermetically sealed container of luminescent nanocrystals are performed in an inert atmosphere. For example, steps 204, 206 and 208 (and 210 if required) are all suitably performed in an inert atmosphere, i.e., either in a vacuum and/or with only N₂ or other inert gas(es) present.

In further embodiments, the present invention provides hermetically sealed compositions and containers comprising a plurality of luminescent nanocrystals. In exemplary embodiments, the luminescent nanocrystals comprise one or more semiconductor materials (as described throughout), and are suitably core/shell luminescent nanocrystals, such as CdSe/ZnS, CdSe/CdS or InP/ZnS. In general, the luminescent nanocrystals are of a size of between about 1-50 nm, suitably about 1-30 nm, more suitably about 1-10 nm, e.g., about 3-9 nm. In exemplary embodiments, as described throughout, the hermetically sealed compositions and containers of the present invention comprise a barrier layer coating the composition (e.g., barrier layer 106 coating composition 100 in Figure 1) and optionally comprise a barrier layer coating the containers (e.g., barrier layer 106 coating container 302 in Figure 3). Exemplary types of barrier layers include those described throughout, such as inorganic layers like SiO₂ TiO₂, and AlO₂.

In addition to generating various shapes, orientations and sizes of containers for hermetically sealing the luminescent nanocrystals, additional modifications can also be made to the containers/compositions. For example, the containers/compositions can be prepared in the shape of a lens for filtration or other modification of a light source. In further embodiments, the containers/compositions can be modified, for example, by preparing or attaching a reflector or similar apparatus to the containers/compositions.

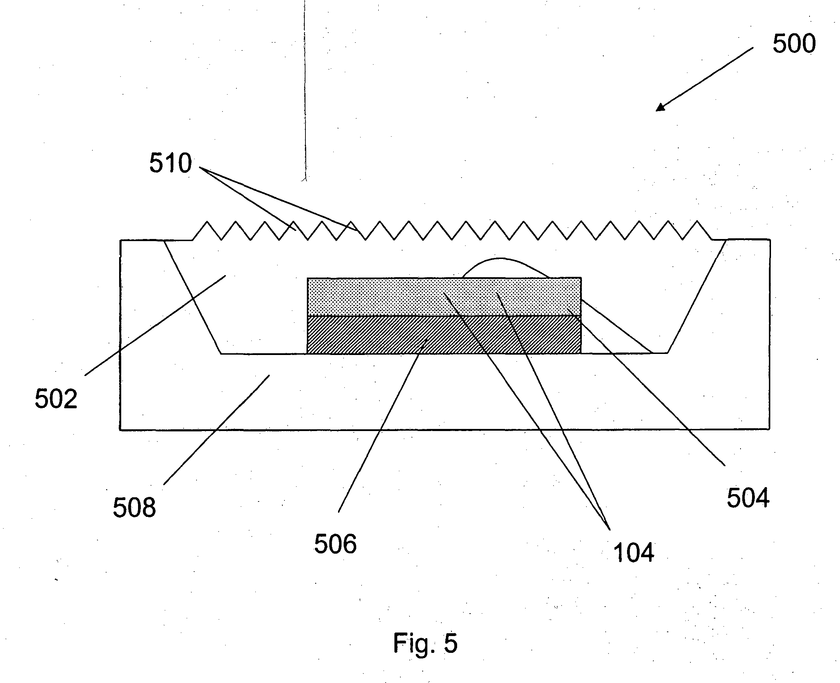

Additionally, micropatterns can be molded directly into the compositions or containers to form flat (or curved) microlenses. This can be done during the molding process or in a subsequent embossing step. Micropatterns are often utilized to make flat microlenses when limited space is available, such as in displays. Examples of this technology include the brightness enhancing films from 3M corporation that have 20 to 50 micron prisms molded into their surface. In suitable embodiments, the present invention provides microlenses comprising luminescent nanocrystals hermetically sealed in an encapsulating polymer (or in a container) which is then micropatterned such that a microlens is formed. For example, as shown in Figure 5, microlens assembly 500 suitably comprises hermetically sealed composition 502 comprising a layer 504 of luminescent nanocrystals 104 placed on top of, or otherwise in contact with, LED 506 which is supported by substrate 508. The surface of composition 502 can be molded into various shapes, for example to include a series of microprisms 510, as shown in Figure 5, thereby forming the microlens.

In exemplary embodiments, use of a microlens in combination with the hermetically sealed compositions of the present invention allow for an increase in the amount of emitted light captured (and therefore emitted from the composition) from the LED/luminescent nanocrystals. For example, the addition of microprisms or other microlens assembly to the hermetically sealed compositions and containers of the present invention suitably leads to an increase in the amount of light captured of greater than about 10% (e.g., about 10-60%, about 10-50%, about 10-40%, about 20%-40%, or about 30-40%) as compared to a composition that does not comprise microprisms or other microlens assembly. This increase in the amount of light captured correlates directly to an increase in the total amount of light that is emitted from the composition or container.

In suitable embodiments, a dichroic mirror can be attached or otherwise associated with the containers/compositions that forms a lens for application over a light source. A dichroic mirror allows a particular wavelength of light to pass through the mirror, while reflecting others. As light from the source enters the lens-shaped containers/compositions, the photons are able to enter the containers/compositions and excite the various luminescent nanocrystals that have been hermetically sealed inside. As the luminescent nanocrystals emit light, photons are able to exit the containers/compositions, but not reflect back toward the initial light source (as they are reflected by the dichroic mirror). In embodiments then, suitable containers/compositions can be created to fit over a light source (e.g., an LED). This allows light to enter from the source and excite the luminescent nanocrystals inside, but emitted light is only allowed to exit the containers/compositions away from the light source, blocked from reflecting back into the source by the dichroic mirror. For example, blue light from an LED source is allowed to pass through the dichroic mirror and excite encapsulated luminescent nanocrystals, which then emit green light. The green light is reflected by the mirror and not allowed to reflect back into the light source.

As discussed herein, in suitable embodiments the hermetically sealed luminescent nanocrystal compositions of the present invention are used in combination with an LED or other light source. Applications for these sealed nanocrystal/LEDs are well known to those of ordinary skill in the art, and include the following. For example, such sealed nanocrystal/LEDs can be used in microprojectors (*see, e.g.,* U.S. Patent No. 7,180,566 and 6,755,563, the disclosures of which are incorporated by reference herein in their entireties); in applications such as cellular telephones; personal digital assistants (PDAs); personal media players; gaming devices; laptops; digital versatile disk (DVD) players and other video output devices; personal color eyewear; and head-up or head-down (and other) displays for automobiles and airplanes. In additional embodiments, the hermetically sealed nanocrystals can be used in applications such as digital light processor (DLP) projectors.

In additional embodiments, the hermetically sealed compositions and containers disclosed throughout can be used to minimize the property of an optical system known as etendue (or how spread out the light is in area and angle). By disposing, layering or otherwise covering (even partially covering) an LED or other light source with a composition or container of the presently claimed invention, and controlling the ratio of the overall area (e.g, the thickness) of the luminescent nanocrystal composition or container to the area (e.g., the thickness) of the LED, the amount or extent of etendue can be minimized, thereby increasing the amount of light captured and emitted. Suitably, the thickness of the luminescent nanocrystal composition or container will be less than about 1/5 the thickness of the LED layer. For example, the luminescent nanocrystal composition or container will be less than about 1/6, less than about 1/7, less than about 1/8, less than about 1/9, less than about 1/10, less than about 1/15 or less than about 1/20 of the thickness of the LED layer.

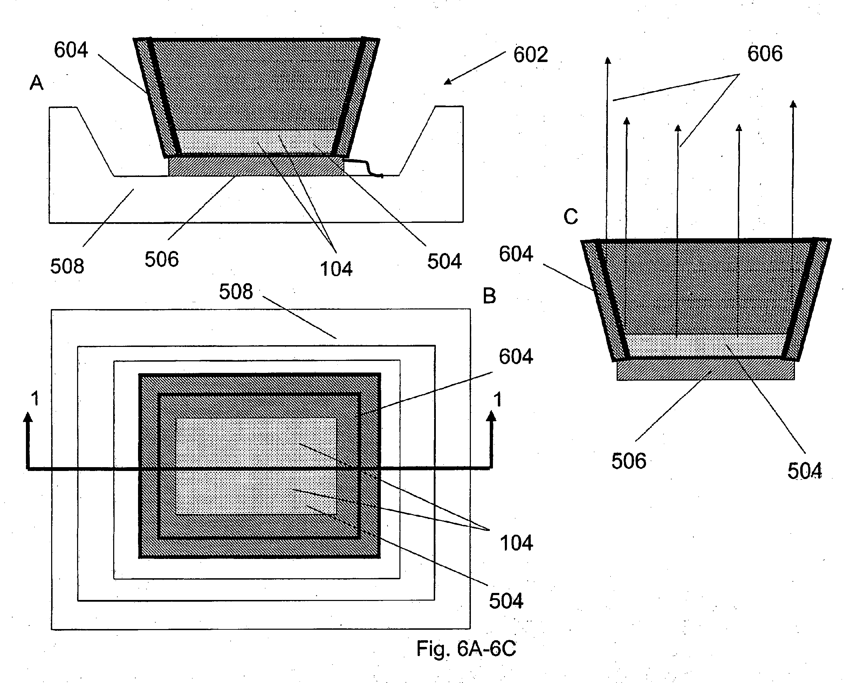

In further embodiments, the hermetically sealed luminescent nanocrystals of the presently claimed invention can be used in a system 602 comprising a light-focusing apparatus (or focusing apparatus) 604, for example, as shown in FIGs. 6A-6C. In exemplary embodiments, a light-focusing apparatus 604 is prepared and attached or otherwise associated with an LED 506. Suitably, light-focusing apparatus 604 is in the shape of a cube or rectangular box, where the bottom of the box situated on or above the LED 506, with the sides of the apparatus extending above the LED. FIG. 6A shows a cross sectional view of apparatus 604, taken through plane 1-1 of FIG. 6B, showing a top view of the apparatus 604, LED 506 and substrate 508. In exemplary embodiments, apparatus 604 comprises four sides surrounding LED 506, though in other embodiments any number of sides can be used (e.g., 2, 3, 4 5, 6, 7, 8, 9, 10, etc.), or a circular apparatus can be used, such that only a single piece (or multiple pieces fashioned for form a continuous piece) of material surrounds LED 506. In general, the top and bottom of light-focusing apparatus 604 are open (i.e., the apparatus is placed directly on top of and encloses LED 506), though in other embodiments, either the top or bottom, or both, of apparatus 604 can be closed by an additional piece of material.

Focusing apparatus 604 suitably is made of a material that can reflect light that is generated by LED, or is coated with a material that reflects light. For example, focusing apparatus can comprise a polymer, metal, ceramic, etc. In other embodiments, the inner surface (i.e., the surface facing LED) can be coated with a reflective material such as a metal (e.g, Al) or other reflective coating. This reflective coating can be deposited on the surfaces of focusing apparatus using any suitable method, such as spray coating, ALD, painting, dipping, spin coating, etc.

Focusing apparatus 604 suitably encloses or encapsulates a hermetically sealed nanocrystal composition 504 (or hermetically sealed nanocrystal container) of the present invention, and thus the apparatus is associated with the composition or container. In suitable embodiments, focusing apparatus 604 can be prepared separately from LED 506 and then attached to the LED, for example by an adhesive such as an epoxy, and then the center portion of the apparatus 604 filled in with a hermetically sealed nanocrystal composition 504. In further embodiments, focusing apparatus 604 can be directly assembled on LED 506. In other embodiments, a hermetically sealed composition can be disposed on LED and then focusing apparatus can be added, either as a pre-made apparatus, or constructed directly on the LED. In suitable embodiments, apparatus 604 also comprises a cover (e.g., a glass or polymer cover) to seal the nanocrystal composition 504. Such a cover can act as a hermetic seal over the nanocrystal composition, or simply as an additional structural element to support the nanocrystal composition and the focusing apparatus. Such a cover can be placed directly on top of nanocrystal composition 504, or can be placed at the top of apparatus 604, or in any position in between.

As shown in FIGs 6A and 6C, in suitable embodiments, focusing apparatus 604 is prepared in such a manner that the sides of the apparatus taper inward at the bottom (e.g., near the LED), but outward at the top (away from the LED). This helps to aid in gathering and focusing the light 606 into a beam so as to direct the light out of the apparatus. As shown FIG 6C, suitably focusing apparatus 604 directs light 606 out from the LED. By using tapered or angled sides, light 606 that is emitted from the LED/nanocrystals is directed out of the apparatus 604, rather than lost either by bouncing back and forth inside of the apparatus, or lost simply unable to escape. Use of light-focusing apparatus in combination with the luminescent nanocrystal compositions and containers of the present invention can suitably be employed in microprojectors and other applications where a focus, beam of light is desired or required.

### EXAMPLES

The following examples are illustrative, but not limiting, of the method and compositions of the present invention. Other suitable modifications and adaptations of the variety of conditions and parameters normally encountered in nanocrystal synthesis, and which would become apparent to those skilled in the art, and are within the spirit and scope of the invention.

### Example 1

### Preparation of Hermetically Sealed Containers

A rectangular tube of approximate dimensions 3 mm x 0.5 mm with a 2 mm x 0.5 mm cavity is prepared by extrusion of PMMA. The length of tubing is then filled with a solution comprising fluorescent luminescent nanocrystals. The luminescent nanocrystal solution is then cured. Segments of the tubing are then heat sealed to trap the nanocrystals in the tubing. Suitably the filling and sealing are performed in an inert atmosphere. A barrier layer (e.g., SiO₂, TiO₂ or AlO₂) can then be disposed on the outer surface of the tubing.

A drawn glass capillary can also be used to prepare a hermetically sealed container comprising nanocrystals. The end of the capillary is sealed either via melt sealing or plugging with a solder or adhesive or similar structure. The capillary can be filled with a solution of luminescent nanocrystals such that the entire volume of the capillary is filled with the same nanocrystal solution, or the capillary can be filled in stages, such that different nanocrystals are separated along the length of the capillary. For example, a first luminescent nanocrystal solution can be introduced into the capillary, and then a seal placed adjacent to the solution (for example, but melt sealing or plugging the capillary). A second luminescent nanocrystal solution can then be added to the capillary, and again, a seal placed adjacent to the solution. This process can be repeated as often as required until the desired number of individual, hermetically sealed nanocrystal segments are created. In this manner, different compositions of luminescent nanocrystals can be separated from each other in the same container, thereby allowing the production of containers comprising multiple compositions (e.g., colors) of luminescent nanocrystals. In a similar embodiment, a multi-lumen capillary can be used in which different compositions of luminescent nanocrystals (e.g., those which emit different colors) can be introduced and thus kept separate from each other, and still be hermetically sealed from external air and moisture.

## Claims

1. A method of hermetically sealing a container comprising a plurality of luminescent nanocrystals, wherein the container is a glass tube, the method comprising introducing a matrix comprising the luminescent nanocrystals to the glass tube and sealing the glass tube.

2. The method of claim 1, wherein the glass tube is sealed at one end by adhesive bonding.

3. The method of claim 2, wherein, the adhesive comprises an epoxy.

4. The method of claim 1, wherein the glass tube is sealed at one end by soldering.

5. The method of claim 1, wherein the glass tube is sealed at one end by heat sealing.

6. The method of any one of the preceding claims, wherein the method is carried out in an inert atmosphere.

7. The method of any one of the preceding claims, wherein the nanocrystals comprise semiconductor material or wherein the nanocrystals are core-shell luminescent nanocrystals.

8. The method of claim 7, wherein the core-shell luminescent nanocrystals are CdSe/ZnS, CdSe/CdS or InP/ZnS nanocrystals.

9. A hermetically sealed container comprising a plurality of luminescent nanocrystals, wherein the container is a sealed glass tube, containing a matrix comprising the luminescent nanocrystals.

10. The hermetically sealed container of claim 9, wherein the glass tube is sealed at one end with an adhesive.

11. The hermetically sealed composition of claim 10, wherein the adhesive comprises an epoxy.

12. The hermetically sealed container of claim 9, wherein the glass tube is sealed at one end with a solder.

13. The hermetically sealed container of claim 9, wherein the glass tube is heat-sealed at one end.

14. The hermetically sealed container of any one of claims 9 to 13, wherein the nanocrystals comprise semiconductor material or wherein the nanocrystals are core-shell luminescent nanocrystals.

15. The hermetically sealed container of claim 14, wherein the core-shell luminescent nanocrystals are CdSe/ZnS, CdSe/CdS or InP/ZnS nanocrystals.

16. The hermetically sealed container of any one of claims 9 to 15:
wherein the luminescent nanocrystals are between about 1-10 nm in size; or
wherein the container comprises a barrier layer coating the container; or
further comprising a light-focusing apparatus associated with the container.

17. The hermetically sealed container of claim 16, wherein the barrier layer comprises an inorganic layer optionally comprising SiO₂, TiO₂ or AlO₂.

18. The hermetically sealed container of any one of claims 9 to 16, further comprising:
a micropattern moulded into the container to form a microlens, in particular wherein the microlens captures at least 10% more light that is emitted from the container as compared to a container that does not comprise the microlens, more particularly wherein the microlens captures about 30-40% more light that is emitted from the container as compared to a container that does not comprise the microlens.

## Patentansprüche

1. Verfahren zum hermetischen Verschließen eines Behälters, der eine Vielzahl von lumineszierenden Nanokristallen umfasst, worin der Behälter ein Glasröhrchen ist, wobei das Verfahren das Einführen einer Matrix, die die lumineszierenden Nanokristalle umfasst, in das Glasröhrchen und das Verschließen des Glasröhrchens umfasst.

2. Verfahren nach Anspruch 1, worin das Glasröhrchen an einem Ende durch Verkleben verschlossen wird.

3. Verfahren nach Anspruch 2, worin der Klebstoff ein Epoxid umfasst.

4. Verfahren nach Anspruch 1, worin das Glasröhrchen an einem Ende durch Löten verschlossen wird.

5. Verfahren nach Anspruch 1, worin das Glasröhrchen an einem Ende durch Wärmeverschluss verschlossen wird.

6. Verfahren nach einem der vorangegangenen Ansprüche, worin das Verfahren in einer inerten Atmosphäre durchgeführt wird.

7. Verfahren nach einem der vorangegangenen Ansprüche, worin die Nanokristalle Halbleitermaterial umfassen oder worin die Nanokristalle lumineszierende Kern-Schalen-Nanokristalle sind.

8. Verfahren nach Anspruch 7, worin die lumineszierenden Kern-Schalen-Nanokristalle CdSe/ZnS-, CdSe/CdS- oder InP/ZnS-Nanokristalle sind.

9. Hermetisch verschlossener Behälter, der eine Vielzahl von lumineszierenden Nanokristallen umfasst, worin der Behälter ein verschlossenes Glasröhrchen ist, das eine Matrix enthält, die die lumineszierenden Nanokristalle umfasst.

10. Hermetisch verschlossener Behälter nach Anspruch 9, worin das Glasröhrchen an einem Ende mit einem Klebstoff verschlossen ist.

11. Hermetisch eingeschlossene Zusammensetzung nach Anspruch 10, worin der Klebstoff ein Epoxid umfasst.

12. Hermetisch verschlossener Behälter nach Anspruch 9, worin das Glasröhrchen an einem Ende mit einem Lot verschlossen ist.

13. Hermetisch verschlossener Behälter nach Anspruch 9, worin das Glasröhrchen an einem Ende wärmeverschlossen ist.

14. Hermetisch verschlossener Behälter nach einem der Ansprüche 9 bis 13, worin die Nanokristalle Halbleitermaterial umfassen oder worin die Nanokristalle lumineszierende Kern-Schalen-Nanokristalle sind.

15. Hermetisch verschlossener Behälter nach Anspruch 14, worin die lumineszierenden Kern-Schalen-Nanokristalle CdSe/ZnS-, CdSe/CdS- oder InP/ZnS-Nanokristalle sind.

16. Hermetisch verschlossener Behälter nach einem der Ansprüche 9 bis 15,
worin die lumineszierenden Nanokristalle zwischen etwa 1 und 10 nm groß sind; oder
worin der Behälter eine Sperrschicht umfasst, die den Behälter überzieht; oder der des Weiteren eine Lichtfokussierungsvorrichtung in Verbindung mit dem Behälter umfasst.

17. Hermetisch verschlossener Behälter nach Anspruch 16, worin die Sperrschicht eine anorganische Schicht umfasst, die gegebenenfalls SiO₂, TiO₂ oder AlO₂ umfasst.

18. Hermetisch verschlossener Behälter nach einem der Ansprüche 9 bis 16, der des Weiteren Folgendes umfasst:
ein in den Behälter geformtes Mikromuster zur Ausbildung einer Mikrolinse, worin insbesondere die Mikrolense zumindest 10 % mehr Licht, das aus dem Behälter emittiert wird, einfängt als aus einem Behälter, der die Mikrolinse nicht umfasst, genauer gesagt, worin die Mikrolinse etwa 30 bis 40 % mehr Licht, das aus dem Behälter emittiert wird, einfängt als aus einem Behälter, der die Mikrolinse nicht umfasst.

## Revendications

1. Procédé pour sceller hermétiquement un contenant comprenant une pluralité de nanocristaux luminescents, dans lequel le contenant est un tube en verre, le procédé comprenant l'introduction, dans le tube en verre, d'une matrice comprenant les nanocristaux luminescents, et le scellement du tube en verre.

2. Procédé selon la revendication 1, dans lequel le tube en verre est scellé à une extrémité par collage.

3. Procédé selon la revendication 2, dans lequel la colle comprend un époxy.

4. Procédé selon la revendication 1, dans lequel le tube en verre est scellé à une extrémité par brasage.

5. Procédé selon la revendication 1, dans lequel le tube en verre est scellé à une extrémité par thermosoudage.

6. Procédé selon l'une quelconque des revendications précédentes, lequel procédé est réalisé dans une atmosphère inerte.

7. Procédé selon l'une quelconque des revendications précédentes, dans lequel les nanocristaux comprennent un matériau semi-conducteur ou dans lequel les nanocristaux sont des nanocristaux luminescents coeur-enveloppe.

8. Procédé selon la revendication 7, dans lequel les nanocristaux luminescents coeur-enveloppe sont des nanocristaux de CdSe/ZnS, CdSe/CdS ou InP/ZnS.

9. Contenant hermétiquement scellé comprenant une pluralité de nanocristaux luminescents, lequel contenant est un tube en verre scellé, contenant une matrice comprenant les nanocristaux luminescents.

10. Contenant hermétiquement scellé selon la revendication 9, dans lequel le tube en verre est scellé à une extrémité avec une colle.

11. Composition hermétiquement scellée selon la revendication 10, dans lequel la colle comprend un époxy.

12. Contenant hermétiquement scellé selon la revendication 9, dans laquelle le tube en verre est scellé à une extrémité avec une brasure.

13. Contenant hermétiquement scellé selon la revendication 9, dans lequel le tube en verre est thermosoudé à une extrémité.

14. Contenant hermétiquement scellé selon l'une quelconque des revendications 9 à 13, dans lequel les nanocristaux comprennent un matériau semi-conducteur ou dans lequel les nanocristaux sont des nanocristaux luminescents coeur-enveloppe.

15. Contenant hermétiquement scellé selon la revendication 14, dans lequel les nanocristaux luminescents coeur-enveloppe sont des nanocristaux de CdSe/ZnS, CdSe/CdS ou InP/ZnS.

16. Contenant hermétiquement scellé selon l'une quelconque des revendications 9 à 15 :
dans lequel les nanocristaux luminescents ont une taille comprise entre environ 1 et 10 nm ; ou
dans lequel le contenant comprend une couche barrière revêtant le contenant ; ou
comprenant en outre un dispositif focalisant la lumière associé au contenant.

17. Contenant hermétiquement scellé selon la revendication 16, dans lequel la couche barrière comprend une couche inorganique comprenant éventuellement SiO₂, TiO₂ ou AlO₂.

18. Contenant hermétiquement scellé selon l'une quelconque des revendications 9 à 16, comprenant en outre :
un micromotif moulé dans le contenant pour former une microlentille, où en particulier la microlentille capte au moins 10 % de plus de lumière qui est émise par le contenant comparativement à un contenant qui ne comprend pas la microlentille, où plus particulièrement la microlentille capte environ 30-40 % de plus de lumière qui est émise par le contenant comparativement à un contenant qui ne comprend pas la microlentille.
